# EUROPEAN PATENT SPECIFICATION

(11) **EP 1 560 883 B1**
(45) Date of publication and mention of the grant of the patent: **10.07.2013**
(21) Application number: 03810962.5
(22) Date of filing: 04.11.2003
(51) Int. Cl.: C09B 29/036, C09B 67/22, C09B 29/09, C09B 43/42

(54) **PHTHALIMIDYL-AZO DYES, PROCESS FOR THEIR PREPARATION AND THEIR USE**
PHTHALIMIDYLAZOFARBSTOFFE, DEREN HERSTELLUNG UND DEREN VERWENDUNG
COLORANTS A BASE DE PHTHALIMIDYLE AZO, PROCEDE DE PREPARATION ET UTILISATION

(30) Priority: 11.11.2002 EP 02405967
(43) Date of publication of application: 10.08.2005
(73) Proprietor: Huntsman Advanced Materials (Switzerland) GmbH, 4057 Basel (CH)
(72) Inventor: CLEMENT, Antoine, CH-1723 Marly (CH); ARQUINT, Alfons, CH-4058 Basel (CH); LAUK, Urs, CH-8047 Zürich (CH)
(86) International application number: PCT/EP2003/012282
(87) International publication number: WO 2004/044058

(56) References cited:
- EP-A- 0 051 563
- EP-A- 0 443 984
- EP-A- 0 623 654
- EP-A- 0 667 376
- WO-A-00/40656
- WO-A-02/068539
- WO-A-02/074864
- US-A- 3 980 634
- DATABASE REGISTRY FILE [Online] Chemical Abstracts Service; Columbus, Ohio, USA; RN: 479194-50-8, "Acetamide, N-[5-[bis(2-methoxyethyl)amino] -2-[(6- cyano-2-ethyl-2,3-dihydro-1,3-dioxo-1H-iso indol-5-yl)azo]phenyl]- (9CI) (CA INDEX NAME)" XP002272770
- WOJCIECHOWSKI K: "Halochromic Effects of Azophthalimide Dyes and their Prediction by PPP Method" DYES AND PIGMENTS, ELSEVIER APPLIED SCIENCE PUBLISHERS. BARKING, GB, vol. 32, no. 4, 1 December 1996 (1996-12-01), pages 199-208, XP004063115 ISSN: 0143-7208
- DATABASE WPI Section Ch, Week 197617 Derwent Publications Ltd., London, GB; Class A23, AN 1976-31166X XP002272772 & JP 51 029577 A (MITSUBISHI CHEM IND LTD) , 12 March 1976 (1976-03-12)

## Description

The present invention relates to disperse dyes having an N-alkyl-phthalimide diazo component and an aniline coupling component, to a process for the preparation of those dyes and to their use in the dyeing or printing of semi-synthetic and, especially, synthetic hydrophobic fibre materials, more especially textile materials.

Azo disperse dyes having an N-alkyl-phthalimide diazo component and an aniline coupling component have been known, for example, from U.S. Patent No. 3 980 634, WO 00/40656, WO 02/074864, WO 02/068539, EP-A 443 984 and EP-A 667 376 and are used in the dyeing of hydrophobic fibre materials. It has been shown, however, that the dyeings or prints obtained with the dyes known at present do not satisfy today's demands in all cases, especially in respect of fastness to washing and perspiration. There is therefore a need for new dyes which exhibit especially good fastness properties to washing.

It has now been found, surprisingly, that the dyes according to the invention meet the criteria given above to a considerable degree.

The present invention accordingly relates to disperse dyes which yield dyeings that have high fastness to washing and perspiration, and which additionally possess good build-up both in the exhaust and thermosol process and in textile printing. The dyes are also suitable for discharge printing.

The dyes according to the invention correspond to formula 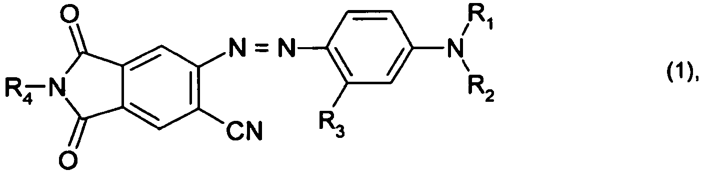 wherein R₁ is 2-methoxyethyl, 2-ethoxyethyl or 2-(2-ethoxyethoxy)ethyl,
R₂ is C₁-C₆alkyl which is unsubstituted or substituted by one or more hydroxy groups, halogen atoms, C₁-C₄alkoxy groups, C₂-C₈alkoxyalkoxy groups, C₁-C₄alkyl-COO- groups or C₁-C₄alkyl-OCO- groups,
R₃ is methyl, hydroxy, halogen, -NH-SO₂-R₅ or -NH-CO-R₆, wherein R₅ is methyl or ethyl and R₆ is methyl, ethyl, methoxymethyl or 2-methoxyethyl, and
R₄ is ethyl or n-propyl.

C₁-C₆Alkyl as R₂ may be, for example, methyl, ethyl, n-propyl, isopropyl, n-butyl, isobutyl, sec-butyl, tert-butyl, n-pentyl, neopentyl or n-hexyl.

Halogen as R₃ is fluorine, bromine or, preferably, chlorine.

R₁ and R₂ preferably have the same meaning.

R₁ is preferably 2-methoxyethyl.

R₃ is preferably -NH-CO-R₆.

R₆ is preferably methyl.

R₄ is preferably ethyl.

Special preference is given to dyes of formulae (1a), (1b) and (1c)

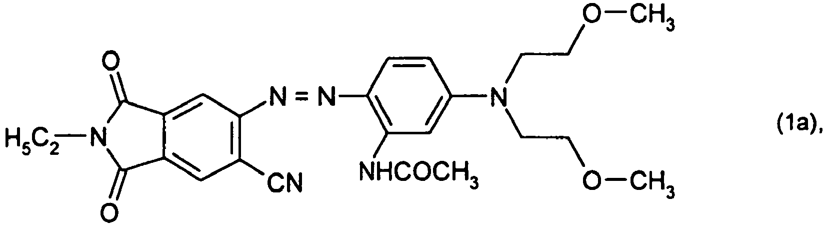

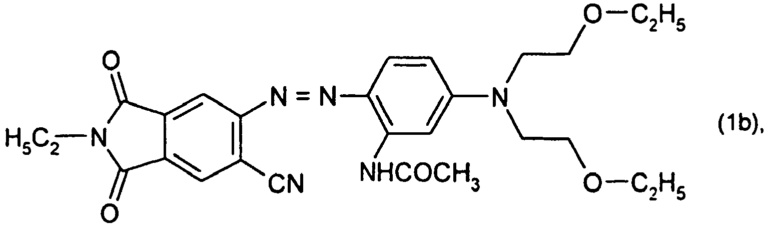

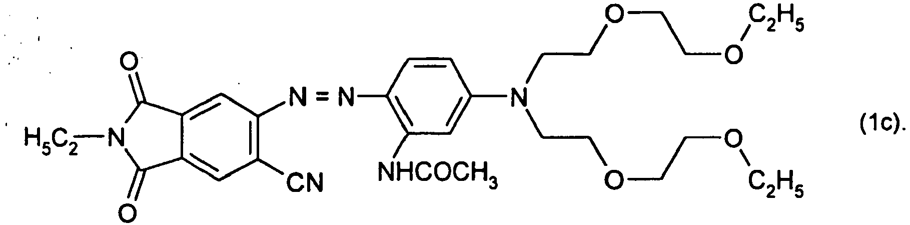

The present invention relates also to a process for the preparation of the dyes of formula (1), in which a phthalimide of formula 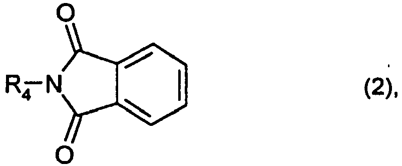 wherein R₄ is as defined above,
is nitrated in the acidic range, as described, for example, on page 459 in Organic Synthesis, Collective Volume 2, (a Revised Edition of Annual Volumes X-XIX), J. Wiley & Sons, the resulting nitro compound is then alkylated, for example according to a method indicated in Journal of Organic Chemistry 32 (1967) on page 1923, paragraph 3, and converted, for example by means of reductive treatment as described in Bull. Soc. Chim. de France 1957 on page 569, into an intermediate of formula 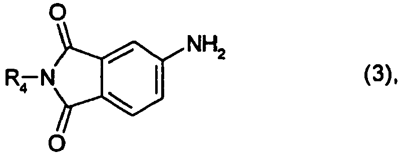 the intermediate of formula (3) is monohalogenated according to generally known methods in an acidic medium, then diazotised and coupled to a compound of formula (4) 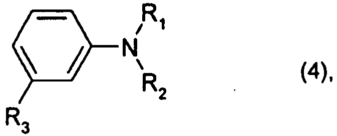 wherein R₁, R₂ and R₃ are as defined above, and then the halogen substituent is replaced by cyano.

The halogenation is carried out, for example, by reacting the compound of formula (3) first in acetic acid with sodium acetate and then, in the same medium, with bromine to form the corresponding monobromine compound.

The diazotisation is also carried out in a manner known *per se,* for example with sodium nitrite in an acidic, e.g. hydrochloric-acid-containing or sulfuric-acid-containing, aqueous medium. The diazotisation may, however, also be carried out using other diazotisation agents, for example using nitrosylsulfuric acid. In the diazotisation, an additional acid may be present in the reaction medium, e.g. phosphoric acid, sulfuric acid, acetic acid, propionic acid or hydrochloric acid or a mixture of such acids, e.g. a mixture of propionic acid and acetic acid. The diazotisation is advantageously carried out at temperatures of from -10 to 30°C, for example from -10°C to room temperature.

The coupling of the diazotised compound to the coupling component of formula (4) is likewise effected in known manner, for example in an acidic, aqueous or aqueous-organic, medium, advantageously at temperatures of from -10 to 30°C, especially below 10°C. Examples of acids used are hydrochloric acid, acetic acid, propionic acid, sulfuric acid and phosphoric acid.

The reaction to the final dyes is carried out by cyano replacement in the monohalogen compound according to methods known *per se,* for example using CuCN or mixtures of CuCN and alkali metal cyanide in solvents, for example dimethylformamide, dimethyl sulfoxide, dimethylacetamide, N-methylpyrrolidone, sulfolane or pyridine.

The diazo components and the coupling components of formula (4) are known or can be prepared in a manner known *per se*.

The present invention relates also to dye mixtures comprising at least two structurally different azo dyes of formula (1).

Dye mixtures that comprise two structurally different azo dyes of formula (1) are preferred.

The dye mixtures according to the invention comprising at least two structurally different azo dyes of formula (1) can be prepared, for example, by simply mixing the individual dyes.

The amount of the individual dyes in the dye mixtures according to the invention can vary within a wide range of, for example, from 95:5 to 5:95 parts by weight, especially from 70:30 to 30:70 parts by weight, more especially from 55:45 to 45:55 parts by weight of the individual dyes in a dye mixture comprising two azo dyes according to the invention.

The dyes and dye mixtures according to the invention can be used in the dyeing or printing of semi-synthetic and, especially, synthetic hydrophobic fibre materials, more especially textile materials. Textile materials composed of blends that contain such semi-synthetic or synthetic hydrophobic fibre materials can likewise be dyed or printed using the dyes or dye mixtures according to the invention.

Suitable semi-synthetic fibre materials are especially cellulose 2½-acetate and cellulose triacetate.

Synthetic hydrophobic fibre materials consist especially of linear, aromatic polyesters, for example polyesters of terephthalic acid and glycols, especially ethylene glycol, or condensation products of terephthalic acid and 1,4-bis(hydroxymethyl)cyclohexane; of polycarbonates, e.g. polycarbonates of α,α-dimethyl-4,4-dihydroxy-diphenylmethane and phosgene, or of fibres based on polyvinyl chloride and on polyamide.

The application of the dyes and dye mixtures according to the invention to the fibre materials is effected in accordance with known dyeing procedures. For example, polyester fibre materials are dyed in the exhaust process from an aqueous dispersion in the presence of customary anionic or non-ionic dispersants and optionally customary swelling agents (carriers) at temperatures of from 80 to 140°C. Cellulose 2½-acetate is dyed preferably at from 65 to 85°C and cellulose triacetate at temperatures of from 65 to 115°C.

The dyes and dye mixtures according to the invention will not colour wool and cotton present in the dyebath at the same time or will colour such materials only slightly (very good reservation), so that they can also be used satisfactorily in the dyeing of polyester/wool and polyester/cellulosic fibre blend fabrics.

The dyes and dye mixtures according to the invention are suitable for dyeing in accordance with the thermosol process, in the exhaust process and for printing processes.

The said fibre materials can be in a variety of processing forms, e.g. in the form of fibres, yarns or non-wovens, in the form of woven fabrics or knitted fabrics.

It is advantageous to convert the dyes or dye mixtures according to the invention into a dye preparation prior to use. For this purpose, the dye is ground so that its particle size is on average from 0.1 to 10 microns. The grinding can be carried out in the presence of dispersants. For example, the dried dye is ground with a dispersant or is kneaded into paste form with a dispersant and then dried *in vacuo* or by atomisation. The preparations so obtained can be used, after the addition of water, to prepare printing pastes and dyebaths.

For printing, customary thickeners will be used, e.g. modified or unmodified natural products, for example alginates, British gum, gum arabic, crystal gum, locust bean flour, tragacanth, carboxymethylcellulose, hydroxyethylcellulose, starch or synthetic products, for example polyacrylamides, polyacrylic acid or copolymers thereof or polyvinyl alcohols.

The dyes and dye mixtures according to the invention impart to the mentioned materials, especially to polyester materials, level colour shades having very good in-use fastness properties, such as, especially, good fastness to light, fastness to thermofixing, to pleating, to chlorine and to wetting, such as fastness to water, perspiration and washing; the finished dyeings are also distinguished by very good fastness to rubbing. Special mention is to be made of the good fastness to perspiration and, especially, to washing of the resulting dyeings.

The dyes and dye mixtures according to the invention can also be used satisfactorily in the preparation of mixed shades together with other dyes.

In addition, the dyes and dye mixtures according to the invention are also highly suitable for the dyeing of hydrophobic fibre materials from supercritical CO₂.

The present invention relates also to the above-mentioned use of the dyes and dye mixtures according to the invention, and to a method of dyeing or printing semi-synthetic or synthetic hydrophobic fibre materials, especially textile materials, which method comprises applying a dye according to the invention to the mentioned materials or incorporating it therein. The mentioned hydrophobic fibre materials are especially textile polyester materials. Further substrates which can be treated by the method according to the invention, as well as preferred process conditions, are to be found hereinbefore in the more detailed explanation of the use of the dyes according to the invention.

The invention relates also to hydrophobic fibre materials, especially polyester textile materials, which have been dyed or printed by the mentioned method. The dyes according to the invention are also suitable for modern recording processes, e.g. thermotransfer printing.

The Examples which follow serve to illustrate the invention. In the Examples, parts are parts by weight and percent are percent by weight, unless indicated otherwise. Temperatures are given in degrees Celsius. The relationship between parts by weight and parts by volume is the same as that between grams and cubic centimetres.

### I. Preparation Examples

### Example I.1:

A. 5.5 ml of 96 % sulfuric acid are placed in a laboratory reaction apparatus. 1.3 ml of ice-water are added dropwise with stirring and while cooling with an ice bath. Then, at an internal temperature of 25°C, 2.7 g of the compound of formula 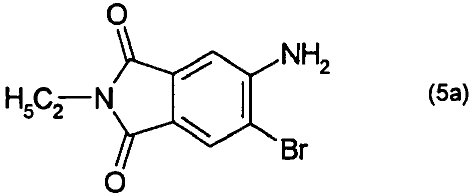 are introduced. The suspension so obtained is stirred for 10 minutes. 1.85 ml of 40 % nitrosylsulfuric acid are then added dropwise in the course of 10 minutes, while cooling at 18-20°C, and stirring is carried out for 2 hours at that temperature.

1 ml of 32 % hydrochloric acid in 60 ml of ice-water is introduced into a 250 ml laboratory reaction apparatus. A solution of 6.5 g of a 48 % aqueous solution of the compound of formula (4a) 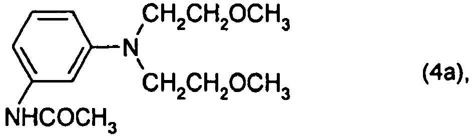 diluted with 25 ml of acetic acid, is added with stirring.

The solution of the diazonium salt is then added in the course of 10 minutes; at the same time, about 50 g of ice are introduced so that the internal temperature is 0-5°C.

The red suspension so obtained is stirred for 1 hour at 0-5°C, filtered off with suction, washed with deionised water and dried.

4.8 g (88 % of the theoretical yield) of the compound of formula 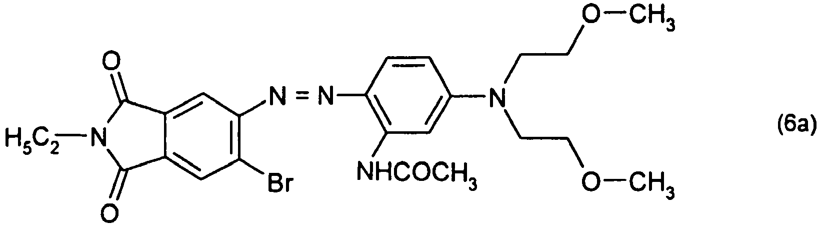 are obtained.

| | |
|---|---|
| Melting point: | 175-178°C |
| Appearance: | yellowish brown-red |

B. 2.23 g of the compound of formula (6a) and 10 ml of dimethyl sulfoxide are placed in a 100 ml laboratory reaction apparatus and stirred at room temperature (RT) for 10 minutes. 0.17 g of sodium cyanide and 0.30 g of copper(I) cyanide are then introduced, and the mixture is stirred for 10 minutes at RT. The temperature is then raised to 70-75°C. The reaction mixture is stirred for 2 hours at that temperature. After cooling to 60°C and the dropwise addition of 5 ml of water, the suspension is filtered off with suction, washed with warm water (50°C) and dried.

1.8 g (73 % of the theoretical yield) of the azo dye of formula 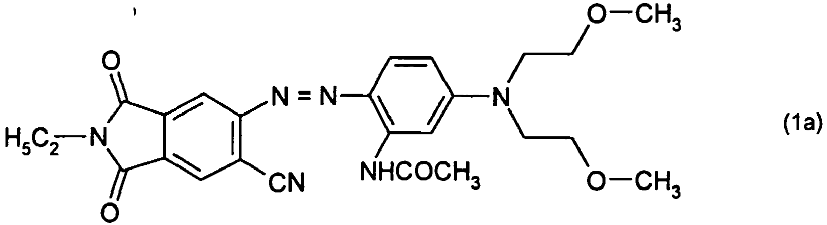 are obtained.

| | |
|---|---|
| Melting point: | 200-203°C |
| Appearance: | violet |

The following dyes, which are likewise suitable for the dyeing of semi-synthetic or synthetic hydrophobic fibre materials, can be prepared analogously to Example I.1 (Table 1):

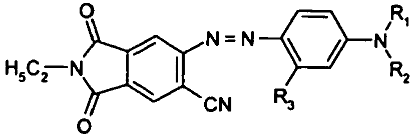

**Table 1:**

| **R₁** | **R₂** | **R₃** |
|---|---|---|
| -CH₂CH₂OCH₃ | -CH₂CH₂OCH₃ | -CH₃ |
| " | -C₂H₅ | " |
| " | -CH₂CH₂CH₃ | " |
| " | -CH₂COOCH₃ | " |
| " | -CH₂COOC₂H₅ | " |
| " | -CH(CH₃)-COOCH₃ | " |
| " | -CH(CH₃)-COOC₂H₅ | " |
| " | -CH₂CH₂COOCH₃ | " |
| " | -CH₂CH₂COOC₂H₅ | " |
| " | -CH₂CH₂O-CO-CH₃ | " |
| " | -CH₂CH₂O-CO-C₂H₅ | " |
| " | Benzyl | " |
| " | -C₂H₅ | -NH-CO-CH₃ |
| " | -CH₂CH₂CH₃ | " |
| " | -CH₂COOCH₃ | " |
| " | -CH₂COOC₂H₅ | " |
| " | -CH(CH₃)-COOCH₃ | " |
| " | -CH(CH₃)-COOC₂H₅ | " |
| " | -CH₂CH₂COOCH₃ | " |
| " | -CH₂CH₂COOC₂H₅ | " |
| " | -CH₂CH₂O-CO-CH₃ | " |
| " | -CH₂CH₂O-CO-C₂H₅ | " |
| " | Benzyl | " |
| " | -CH₂CH₂OCH₃ | -NH-CO-C₂H₅ |
| " | -C₂H₅ | " |
| " | -CH₂CH₂CH₃ | " |
| " | -CH₂COOCH₃ | " |
| " | -CH₂COOC₂H₅ | " |
| " | -CH(CH₃)-COOCH₃ | " |
| " | -CH(CH₃)-COOC₂H₅ | " |
| " | -CH₂CH₂COOCH₃ | " |
| " | -CH₂CH₂COOC₂H₅ | " |
| " | -CH₂CH₂O-CO-CH₃ | " |
| " | -CH₂CH₂O-CO-C₂H₅ | " |
| " | Benzyl | " |
| " | -CH₂CH₂OCH₃ | -NH-SO₂-CH₃ |
| " | -C₂H₅ | " |
| " | -CH₂CH₂CH₃ | " |
| " | -CH₂COOCH₃ | " |
| " | -CH₂COOC₂H₅ | " |
| " | -CH(CH₃)-COOCH₃ | " |
| " | -CH(CH₃)-COOC₂H₅ | " |
| " | -CH₂CH₂COOCH₃ | " |
| " | -CH₂CH₂COOC₂H₅ | " |
| " | -CH₂CH₂O-CO-CH₃ | " |
| " | -CH₂CH₂O-CO-C₂H₅ | " |
| " | Benzyl | " |
| " | -CH₂CH₂OCH₃ | -NH-SO₂-CH₃ |
| " | -C₂H₅ | " |
| " | -CH₂CH₂CH₃ | " |
| " | -CH₂COOCH₃ | " |
| " | -CH₂COOC₂H₅ | " |
| " | -CH(CH₃)-COOCH₃ | " |
| " | -CH(CH₃)-COOC₂H₅ | " |
| " | -CH₂CH₂COOCH₃ | " |
| " | -CH₂CH₂COOC₂H₅ | " |
| " | -CH₂CH₂O-CO-CH₃ | " |
| " | -CH₂CH₂O-CO-C₂H₅ | " |
| " | Benzyl | " |
| " | -CH₂CH₂OCH₃ | -NH-CO-CH₂OCH₃ |
| " | -C₂H₅ | " |
| " | -CH₂CH₂CH₃ | " |
| " | -CH₂COOCH₃ | " |
| " | -CH₂COOC₂H₅ | " |
| " | -CH(CH₃)-COOCH₃ | " |
| " | -CH(CH₃)-COOC₂H₅ | " |
| " | -CH₂CH₂COOCH₃ | " |
| " | -CH₂CH₂COOC₂H₅ | " |
| " | -CH₂CH₂O-CO-CH₃ | " |
| " | -CH₂CH₂O-CO-C₂H₅ | " |
| " | Benzyl | " |
| " | -CH₂CH₂OCH₃ | -OH |
| " | -C₂H₅ | " |
| " | -CH₂CH₂CH₃ | " |
| " | -CH₂COOCH₃ | " |
| " | -CH₂COOC₂H₅ | " |
| " | -CH(CH₃)-COOCH₃ | " |
| " | -CH(CH₃)-COOC₂H₅ | " |
| " | -CH₂CH₂COOCH₃ | " |
| " | -CH₂CH₂COOC₂H₅ | " |
| " | -CH₂CH₂O-CO-CH₃ | " |
| " | -CH₂CH₂O-CO-C₂H₅ | " |
| " | Benzyl | " |

### II. Application Examples

### Example II.1:

1 part by weight of the dye of formula 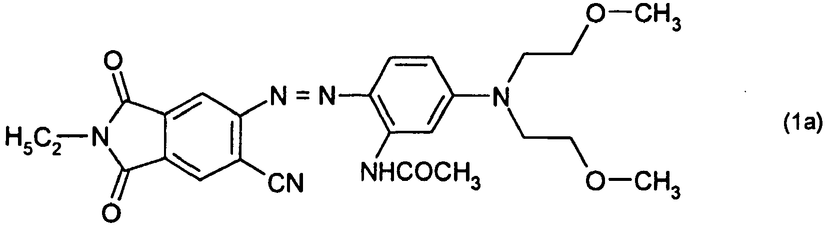 is ground in a sand mill together with 17 parts by weight of water and 2 parts by weight of a commercially available dispersant of the dinaphthylmethanedisulfonate type and converted into a 5 % aqueous dispersion.

Using that formulation, a 1 % dyeing (based on dye and substrate) is produced on polyester fabric by the high-temperature exhaust process at 130°C and is reduction cleared. The violet dyeing so obtained has very good in-use fastness properties, especially excellent fastness to washing.

The same good fastness properties can be achieved when polyester fabric is dyed by the thermosol process (10 g/l of dye, liquor pick-up 50 %, fixing temperature 210°C).

## Claims

1. A dye of formula 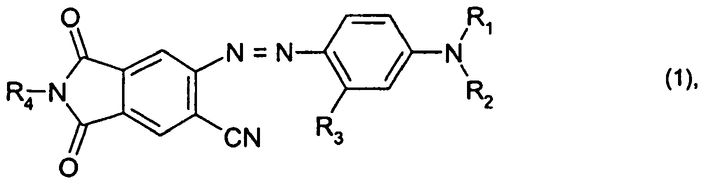 wherein R₁ is 2-methoxyethyl, 2-ethoxyethyl or 2-(2-ethoxyethoxy)ethyl,
R₂ is C₁-C₆alkyl which is unsubstituted or substituted by one or more hydroxy groups, halogen atoms, C₁-C₄alkoxy groups, C₂-C₈alkoxyalkoxy groups, C₁-C₄alkyl-COO- groups or C₁-C₄alkyl-OCO- groups,
R₃ is methyl, hydroxy, halogen, -NH-SO₂-R₅ or-NH-CO-R_{6,} wherein R₅ is methyl or ethyl and R₆ is methyl, ethyl, methoxymethyl or 2-methoxyethyl, and
R₄ is ethyl or n-propyl.

2. A dye according to claim 1, wherein R₁ and R₂ are the same.

3. A dye according to either claim 1 or claim 2, wherein R₁ is 2-methoxyethyl.

4. A dye according to any one of the preceding claims, wherein R₃ is -NH-CO-R₆.

5. A dye according to claim 4, wherein R₈ is methyl.

6. A dye according to any one of the preceding claims, wherein R₄ is ethyl.

7. A dye of formula (1a), (1b) or (1c) according to claim 1

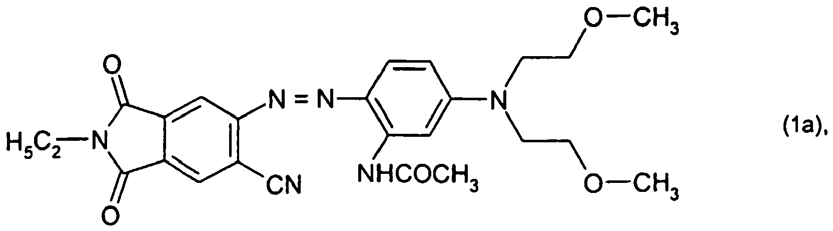

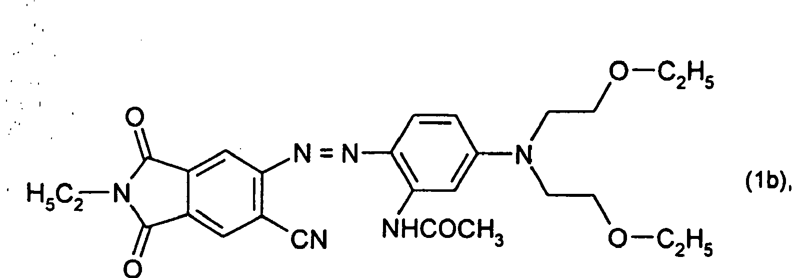

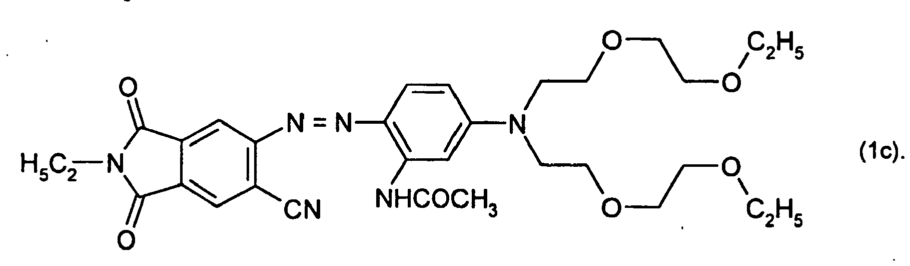

8. A process for the preparation of a dye of formula (1) according to claim 1, in which a phthalimide of formula 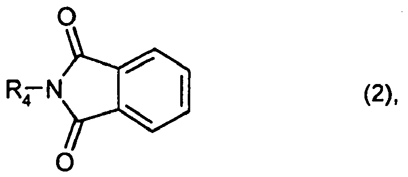 wherein R₄ is as defined in claim 1,
is nitrated in the acidic range, the resulting nitro compound is then alkylated and converted by means of reductive treatment into an intermediate of formula 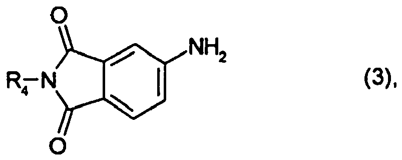 the intermediate of formula (3) is monohalogenated in an acidic medium and then diazotised. coupled to a compound of formula (4) 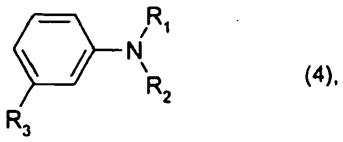 wherein R₁, R₂ and R₃ are as defined in claim 1, and then the halogen substituent is replaced by cyano.

9. A dye mixture comprising at least two structurally different dyes of formula (1) according to claim 1.

10. A method of dyeing or printing a semi-synthetic or synthetic hydrophobic fibre material, in which a dye of formula (1) according to claim 1 or a dye mixture according to claim 9 is applied to the mentioned material or incorporated therein.

11. Use of a dye of formula (1) according to claim 1 in the dyeing or printing of a semi-synthetic or, especially, synthetic hydrophobic fibre material, more especially a textile material.

12. A semi-synthetic or, especially, synthetic hydrophobic fibre material, more especially a textile material, dyed or printed by the process according to claim 10.

## Patentansprüche

1. Farbstoff der Formel 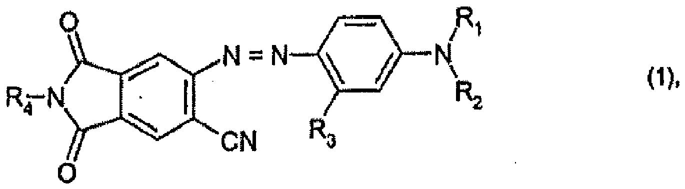 worin R₁ 2-Methoxyethyl, 2-Ethoxyethyl oder 2-(2-Ethoxyethoxy)ethyl ist,
R₂ C₁-C₆Akyl darstellt, welches unsubstituiert oder durch ein oder mehrere Hydroxygruppen, Halogenatome, C₁-C₄Alkoxygruppen, C₂-C₈Alkoxyalkoxygruppen, C₁-C₄Alkyl-COO-Gruppen oder C₁-C₄Alkyl-OCO-Crruppen substituiert ist,
R₃ Methyl, Hydroxy, Halogen, -NH-SO₂-R₅ oder -NH-CO-R₆ darstellt, worin R₅ Methyl oder Ethyl ist und R₆ Methyl, Ethyl, Methoxymethyl oder 2-Methoxyethyl darstellt, und
R₄ Ethyl oder n-Propyl ist.

2. Farbstoff nach Anspruch 1, worin R₁ und R₂ identisch sind.

3. Farbstoff nach einem der Ansprüche 1 oder 2, worin R₁ 2-Methoxyethyl ist.

4. Farbstoff nach einem der vorangehenden Ansprüche, worin R₃ -NH-CO-R₆ darstellt.

5. Farbstoff nach Anspruch 4, worin R₆ Methyl ist.

6. Farbstoff nach einem vorangehenden Ansprüche, worin R₄ Ethyl ist.

7. Farbstoff der Formel (1a), (1b) oder (1c) nach Anspruch 1

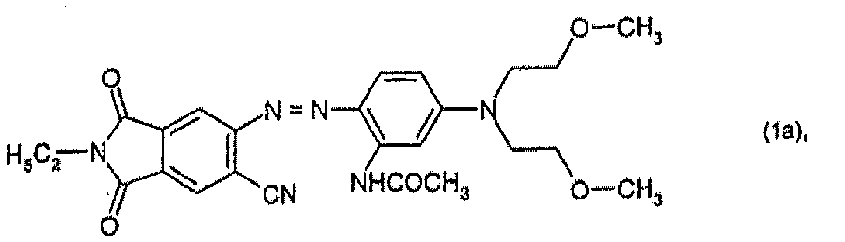

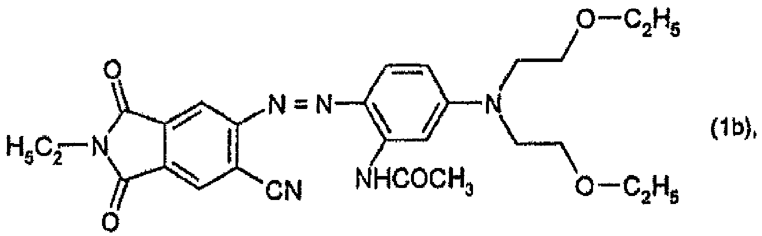

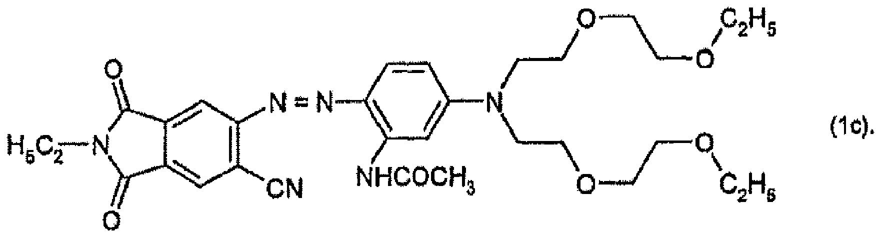

8. Verfahren zur Herstellung eines Farbstoffs der Formel (1) nach Anspruch 1, in dem ein Phthalimid nach Formel 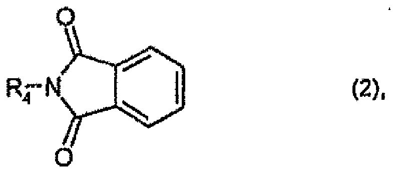 worin R₄ wie in Anspruch 1 definiert ist,
in einem sauren Bereich nitriert wird, die resultierende Nitro-Verbindung anschließend alkyliert und mittels einer reduktiven Behandlung in ein Intermediat der Formel 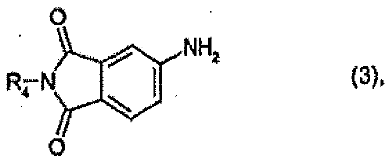 umgewandelt wird, wobei das Intermediat der Formel (3) in einem sauren Medium monohalogeniert und anschließend diazotiert sowie an eine Verbindung der Formel (4) 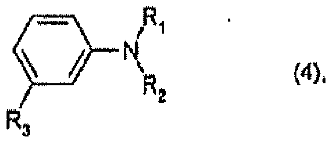 gekoppelt wird, worin R₁, R₂ und R₃ wie in Anspruch 1 definiert sind, und anschließend der Halogensubstituent durch Cyano substituiert wird.

9. Farbstoffmischung, umfassend mindestens zwei strukturell unterschiedliche Farbstoffe der Formel (1) nach Anspruch 1.

10. Verfahren zur Farbgebung oder Bedruckung semisynthetischer oder synthetischer hydrophober Fasermaterialien, bei dem ein Farbstoff der Formel (1) nach Anspruch 1 oder eine Farbstoffmischung nach Anspruch 9 auf das genannte Material aufgetragen oder in dieses eingefügt wird.

11. Verwendung eines Farbstoffs der Formel (1) nach Anspruch 1 bei der Farbgebung oder Bedruckung semisynthetischer oder insbesondere synthetischer hydrophober Fasermaterialien, insbesondere eines Textilmaterials.

12. Semisynthetisches oder insbesondere synthetisches hydrophobes Fasermaterial, insbesondere ein Textilmaterial, welches mittels eines Verfahrens nach Anspruch 10 gefärbt oder bedruckt ist.

## Revendications

1. Colorant de formule : 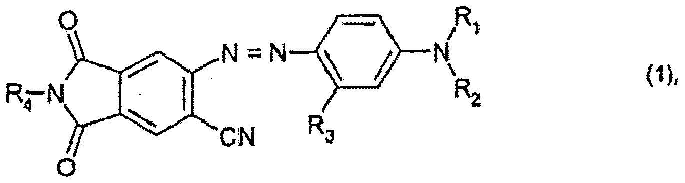 dans laquelle :
- R₁ représente 2-méthoxyéthyle, 2-éthoxyéthyle ou 2-(2-éthoxyéthoxy)éthyle ;
- R₂ représente alkyle en C₁-C₆ qui est non substitué ou substitué par un ou plusieurs groupes hydroxy, atomes d'halogène, groupes alcoxy en C₁-C₄, groupes alcoxyalcoxy en C₂-C₆, groupes alkyl en C₁-C₄-COO- ou groupes alkyle en C₁-C₄-OCO- ;
- R₃ représente méthyle, hydroxy, halogène, -NH-SO₂-R₅ ou -NH-CO-R₆, où R₅ représente méthyle ou éthyle et R₆ représente méthyle, éthyle, méthoxyméthyle ou 2-méthoxyéthyle ; et
- R₄ représente éthyle ou n-propyle.

2. Colorant selon la revendication 1, dans lequel R₁ et R₂ sont identiques.

3. Colorant selon l'une des revendications 1 ou 2, dans lequel R₁ représente 2-méthoxyéthyle.

4. Colorant selon l'une quelconque des revendications précédentes, dans lequel R₃ représente -NH-CO-R₆.

5. Colorant selon la revendication 4, dans lequel R₆ représente méthyle.

6. Colorant selon l'une quelconque des revendications précédentes, dans lequel R₄ représente éthyle.

7. Colorant de formule (1a), (1b) ou (1c) selon la revendication 1 :

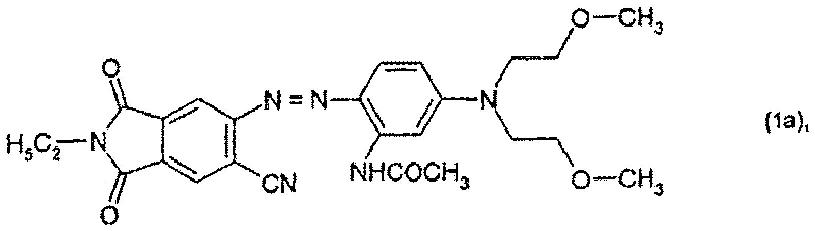

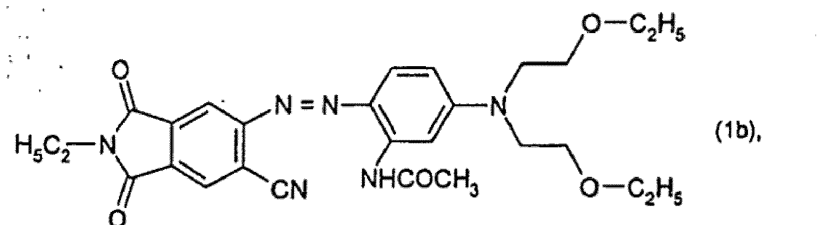

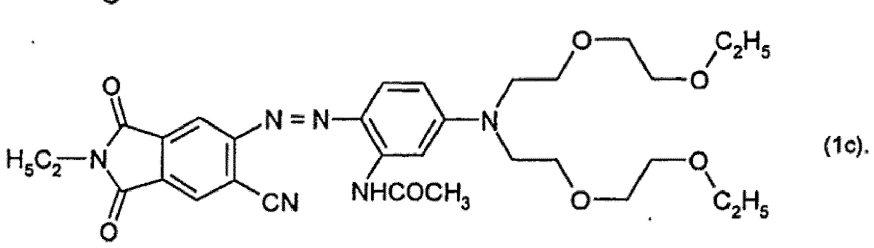

8. Procédé de préparation d'un colorant de formule (1) selon la revendication 1, dans lequel un phtalimide de formule : 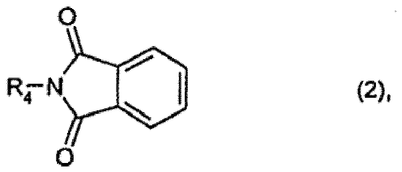 dans laquelle R₄ est tel que défini à la revendication 1, est nitré dans la plage acide, le composé nitro résultant est ensuite alkylé et converti au moyen d'un traitement réducteur en un intermédiaire de formule : 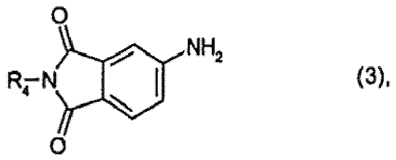 l'intermédiaire de formule (3) est monohalogéné dans un milieu acide, puis diazoté et couplé à un composé de formule (4) 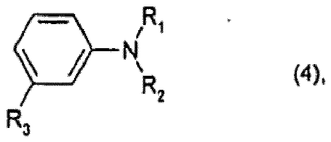 dans laquelle R₁, R₂ et R₃ sont tels que définis à la revendication 1, puis le substituant halogène est remplacé par cyano.

9. Mélange de colorants comprenant au moins deux colorants structuralement différents de formule (1) selon la revendication 1.

10. Procédé de coloration ou d'impression d'une matière fibreuse hydrophobe semi-synthétique ou synthétique, dans lequel un colorant de formule (1) selon la revendication 1 ou un mélange de colorants selon la revendication 9 est appliqué à la matière mentionnée ou incorporé dans celle-ci.

11. Utilisation d'un colorant de formule (1) selon la revendication 1 dans la teinture ou l'impression d'une matière fibreuse hydrophobe semi-synthétique ou, en particulier, synthétique, plus particulièrement une matière textile.

12. Matière fibreuse hydrophobe semi-synthétique ou, en particulier, synthétique, plus particulièrement une matière textile, teinte ou imprimée par le procédé selon la revendication 10.
